Europäisches Patentamt

European Patent Office

Office européen des brevets

(11) Publication number: **0 383 505**
**A2**

(12) **EUROPEAN PATENT APPLICATION**

(21) Application number: **90301430.6**

(22) Date of filing: **09.02.90**

(51) Int. Cl.5: **C08G 18/10, C08G 18/48, C09J 175/04**

(30) Priority: **13.02.89 JP 33220/89**

(43) Date of publication of application:
**22.08.90 Bulletin 90/34**

(84) Designated Contracting States:
**FR GB IT SE**

(71) Applicant: **DAI-ICHI KOGYO SEIYAKU CO., LTD.**
**55 Nishishichijo Higashikubo-cho**
**Shimogyo-ku Kyoto-shi Kyoto-fu(JP)**

(72) Inventor: **Shiraiwa, Tetsuo**
**6-14 Higashiasahigaoka**
**Ikoma-shi, Nara-ken(JP)**
Inventor: **Mori, Shigeo**
**35-1, Katsurachiyohara-cho, Nishikyo-ku**
**Kyoto-shi, Kyoto-fu(JP)**

(74) Representative: **Baverstock, Michael George Douglas et al**
**BOULT, WADE & TENNANT 27 Furnival Street**
**London, EC4A 1PQ(GB)**

(54) **Reactive hot-melt adhesive composition.**

(57) A reactive hot-melt adhesive composition comprises at least one urethane prepolymer and a thermoplastic elastomer, and as a polyol for the urethane prepolymer a polyether polyol having an oxyalkylene group having a carbon number of six or more is used, by which the compatibility of the urethane prepolymer and the thermoplastic elastomer is improved so as to provide an adhesive composition excellent in stability and adhesive strength.

EP 0 383 505 A2

# REACTIVE HOT-MELT ADHESIVE COMPOSITION

The present invention relates to a reactive hot-melt adhesive composition.

A reactive hot-melt adhesive composition comprising a urethane prepolymer and a thermoplastic elastomer is known. For instance, Japanese Patent Application KOKAI No. 63-120785 discloses an adhesive composition comprising as a main ingredient a thermoplastic elastomer and a urethane prepolymer essentially consisting of a reaction product of a polyisocyanate and a mixed polyol which is a mixture of a polyoxybutylene glycol and a hydrocarbon polyol having hydroxyl groups at the terminal positions of the hydrocarbon chain.

Such a conventional reactive hot-melt adhesive composition, however, is insufficient in adhesiveness at high and low temperature. The cause of such insufficiency is considered to be that the compatibility between the thermoplastic elastomer and the mixed polyol containing a polyoxybutylene glycol in which the alkylene group is comparatively short is lower at a low temperature, and the heat resistance of the oxybutylene chain is also low.

The present invention relates to a reactive hot- melt adhesive composition having improved adhesiveness at high and low temperature. The reactive hot-melt adhesive composition of the present invention comprises:

a urethane prepolymer obtained from an organic polyisocyanate and a polyether polyol, in which said polyether polyol contains an oxyalkylene group having the carbon number of 6 or more in the amount of more than 10 % by weight based on the total weight of the polyether polyol, and
a thermoplastic elastomer.

The urethane prepolymer used in the present invention is prepared by reacting an organic polyisocyanate and a polyether polyol.

Any polyisocyanate which can be generally used in the preparation of a conventional polyurethane can be used in the present invention. Examples of such a polyisocyanates include aromatic polyisocyanates such as 2,4-tolylene diisocyanate, 2,6-tolylene diisocyanate, 4,4′-diphenylmethane diisocyanate, 1,5-naphthalene diisocyanate, xylylene diisocyanate, triphenylmethane triisocyanate, and the like; aliphatic polyisocyanates such as hexamethylene diisocyanate, trimethylhexamethylene diisocyanate, 1,3,6-hexamethylene triisocyanate and the like; alicyclic polyisocyanates such as isophorone diisocyanate, hydrogenated xylylene diisocyanate and the like or mixtures thereof. Most preferable polyisocyanates are tolylene diisocyanate, diphenylmethane diisocyanate, hexamethylene diisocyanate, isophorone diisocyanate and the like.

The polyether polyol to be reacted with the polyisocyanate in the present invention should contain at least 10 % by weight of an oxyalkylene group having a carbon number of 6 or more based on the total weight of polyether polyol. The oxyalkylene group having a carbon number of 6 or more may be derived from alkylene oxides such as 1,2-hexylene oxide, cyclohexene oxide, nonene oxide, α-olefin oxides having carbon numbers of 12 - 28, or mixtures thereof. The oxyalkylene group may have one or more branch(s) or unsaturated bond(s). Though the polyether polyols may contain a lower oxyalkylene group derived from a lower alkylene oxide such as ethylene oxide, propylene oxide, butylene oxide and the like, the whole oxyalkylene group may be constituted by those having a carbon number of 6 or more. The content of the oxyalkylene group having a carbon number of 6 or more in the polyether polyol may be preferably more than 10 % by weight. When the polyether polyol is a copolymer, it may be a random or block copolymer.

The polyether polyol according to the present invention may be prepared by reacting the desired alkylene oxide(s) with compounds having two or more active hydrogen atoms in a molecule. Such compounds include, for example, polyols such as ethylene glycol, propylene glycol, 1,4-butanediol, hexanediol, glycerin, trimethylolpropane, pentaerythritol, sorbitol, sucrose, and the like; amines such as monoethanolamine, diethanolamine, triethanolamine, methyldiethanolamine, methyldipropanolamine, ethylenediamine, diethylenetriamine, 2-ethylhexylamine, hexamethylenediamine, phenylenediamine, 1,4-naphthylenediamine and the like; phenols such as bisphenol A, hydroquinone; phosphate-containing polyols; and halogen-containing polyols and the like.

A catalyst for addition polymerization of the alkylene oxides onto the polyols may be an alkaline catalyst such as sodium methylate, sodium hydroxide, potassium hydroxide, lithium carbonate and the like; an acid catalyst such as boron trifluoride and the like; or an amine catalyst such as trimethylamine, triethylamine and the like. The molecular weight of the polyether polyol of the present invention may be preferably 500 - 10000, more preferably 1000 - 7000.

The urethane prepolymer of the present invention may contain another polyol moiety having a saturated or unsaturated aliphatic hydrocarbon backbone (referred to as "polyalkylene polyol A" hereinafter) in addition to the aforementioned polyether polyols of the present invention (referred to as "polyether polyol B" hereinafter).

Examples of polyalkylene polyol A usable in the present invention may be butadiene polymers which have mainly 1,4-linkages and hydroxyl groups at the terminal positions of the polymers, for example, Poly bd R-45HT, Poly bd R-45M, Poly bd CS-15 (available from ARCO CHEMICAL Co., Ltd.); butadiene polymers which have mainly 1,2-linkages and hydroxyl groups at the terminal positions of the polymers, for example, NISSO-PBG (available from Nippon Soda K. K.); or hydrogenated polybutadiene polyols; polyolefin polyols and the like.

The molecular weight of the polyalkylene polyol A is preferably about 500 - 10000, more preferably 1000 -7000.

The ratio of the polyalkylene polyol A to polyether polyol B (A/B) is 0/100 - 90/10, preferably 10/90 - 90/10 in terms of weight ratio. A larger ratio A/B gives a better compatibility between the urethane prepolymer and thermoplastic elastomers, whereas moisture hardening is improved by minimizing the ratio A/B. The compatibility and hardening properties can be achieved even without A.

The compatibility of polyether polyol B and polyalkylene polyol A as well as the compatibility of the urethane prepolymer and the thermoplastic elastomer is improved using a polyether polyol containing an oxyalkylene group having a carbon number of 6 or more in an amount of more than 10 % by weight based on the polyether polyol.

The urethane prepolymer may be prepared by reacting the isocyanates with the polyether polyol B, if desired, together with the polyol A. The isocyanates may be reacted previously with polyether polyol B, and then with polyol A or in reverse order, or with a mixture of both.

The equivalent ratio of isocyanate group of the isocyanate to the hydroxyl group of the polyether polyol B plus polyol A (NCO/OH ratio) is preferably 1.5/1 - 3.0/1, more preferably 1.7/1 - 2.7/1.

The reactive hot-melt adhesive composition of the present invention may be prepared by mixing the urethane prepolymer as aforementioned with a thermoplastic elastomer.

The reactive hot-melt adhesive composition may contain additionally additives such as a tackifier, a wax, a plasticizer, a filler, an antioxidant and the like. In the present specification the composition containing a thermoplastic elastomer plus additives is referred to as a thermoplastic elastomer composition. The content of the thermoplastic elastomer is preferably 30 - 100 % by weight based on the thermoplastic elastomer composition.

As the thermoplastic elastomer there may be exemplified a thermoplastic block copolymer such as isoprene-styrene block copolymer (SIS), butadiene-styrene block copolymer (SBS), hydrogenated copolymer of the latter (SEBS) and the like. As these thermoplastic elastomers exhibit hydrophobic properties, a hot-melt adhesive composition obtained therefrom is also highly hydrophobic.

As a tackifier for use in the present invention there may be exemplified a rosin, rosin derivatives, terpene resins, terpene-phenol resins, petroleum resins (aliphatic, aromatic, copolymeric, alicyclic, and hydrogenated resins), cumarone-indene resins, and the like. A preferable tackifier of the present invention is one having no active hydrogen atom such as hydroxyl group, carboxyl group and so on. Accordingly, the active hydrogen atom of rosin and rosin derivatives attributed to a carboxyl group of abietic acid or so is preferably inactivated by a suitable method such as esterification, or double bonds of the rosin may be partially or wholly hydrogenated. A hydrogenated rosin, a hydrogenated rosin glycerin ester, a hydrogenated rosin pentaerythritol ester, disproportionated rosin, a polymerized rosin and the like are most preferable.

For use as a terpene resin a hydrogenated terpene resin is preferable. As terpene-phenol resins are copolymers of terpenes and phenols, preferably in the molar ratio of terpene/phenol is 1/1 to 3/1. As the petroleum resin there are preferably exemplified hydrogenated resins consisting of $C_5$-fraction, $C_9$-fraction or $C_5$ - $C_9$-fraction; styrene resin copolymer of these fractions with styrene, and hydrogenated resins thereof. Two or more kinds of tackifier may be used as a mixture.

The tackifier of the present invention may be used in an amount of about 30 to about 900 parts by weight, more preferably 50 to 700 parts by weight based on 100 parts by weight of the thermoplastic elastomer. If the amount of the tackifier is less than 30 parts by weight, the tackiness will become insufficient, because it cannot give strong cohesive power to the urethane prepolymer, whereas if the amount of the tackifier is more than 900 parts by weight the elasticity will decrease so that the composition becomes brittle.

As the wax there are exemplified a paraffin wax, a microcrystalline wax, Fischer-Tropsch wax, a polymerized wax, lower molecular weight polyethylene, lower molecular weight polypropylene, a partially modified wax, atactic polypropylene, and the like.

The amount of the wax to be added is preferably from about 20 to about 600 parts by weight, more preferably 50 to 400 parts by weight based on 100 parts by weight of the thermoplastic elastomer. If the amount of the wax is less than 20 parts by weight, cohesive power will not increase and the viscosity of the adhesive composition will not lower even at high temperature. If the amount is more than 600 parts by weight the elasticity of the elastomer composition will decrease.

As the plasticizer there are preferably exemplified a hydrocarbon type plasticizer such as liquid paraffin, polybutene, liquid polybutadiene and the like.

The amount of the plasticizer to be added is about 20 to about 500 parts by weight based on 100 parts by weight of thermoplastic elastomer. If the amount of the plasticizer is less than 20 parts by weight, the reactive hot-melt adhesive composition will scarcely have a workable viscosity in an applicator, and if the amount is more than 500 parts by weight the cohesive power of the composition will become so insufficient that the initial tackiness and the adhesive ability will be reduced.

As the filler any conventional filler which is generally used as a filler for rubbers, plastics, sealants and the like may be used. Such a filler may include calcium carbonate, barium sulfate, talc, clay, titanium oxide, carbon black, white carbon and the like.

The amount of the filler to be added is preferably from about 10 to about 100 parts by weight based on 100 parts by weight of the thermoplastic elastomer.

As the antioxidant hindered phenols are exemplified.

The amount of the antioxidant is preferably about 0.1 to about 10 parts by weight based on the thermoplastic elastomer.

The content of the thermoplastic elastomer in the thermoplastic elastomer composition is preferably about 20 to 80 percent by weight, more preferably about 30 to 70 percent by weight.

The ratio of the urethane prepolymer (UP) to the thermoplastic elastomer composition (TEC), that is, UP/TEC is preferably about 20/80 to about 80/20, more preferably about 30/70 to about 60/40 in terms of weight ratio. The properties of reactive hot-melt adhesive composition of the present invention can be controlled by varying the content of the urethane prepolymer. As the content of the urethane prepolymer increases, that is, the content of the thermoplastic elastomer composition decreases, the initial tackiness reduces, but the heat durability of the hardened product is improved. As the initial tackiness of the composition of the present invention is important, the content of the urethane prepolymer is preferably less than about 80 percent by weight, more preferably about 60 percent by weight. On the other hand, as the content of the urethane copolymer decreases, the heat resistance of the adhesive ability will reduce. Therefore, the content of the urethane prepolymer in the composition is preferably more than 20 percent by weight or more preferably 30 percent by weight.

The present invention is illustrated by the following Examples, in which all parts and percentages are by weight unless otherwise described.

REFERENCE EXAMPLE

Preparation of Polyether Polyol:

Glycerin 92 parts and potassium hydroxide 9 parts were charged into an autoclave (5 liter). After the autoclave was purged with nitrogen gas, cooled nonene oxide 1500 parts was gradually charged therein over 6 hours at 100 °C with stirring, and then propylene oxide 1408 parts were introduced therein over 30 hours at the same temperature. The reaction was completed by heating the mixture at 120 °C for 4 hours. The reaction mixture was treated with synthetic magnesium silicate 100 parts at 120 °C for 5 hours. The product was then filtered through a glass filter to give an objective polyether polyol (referred to as P-1 hereinafter) 2500 parts, which has a hydroxyl value of 56 (mg KOH/g), and an average molecular weight of 3000 by an end-group quantitative determination.

According to a procedure similar to the above 6 kinds of polyether polyol were prepared. The polyols and alkylene oxides used, amounts and the analytical data are shown in Table 1.

4

Table 1

| No. | polyol kind | alkylene oxide | | | | | average mole. wt.[****] | % of $C_6 \leqq$ oxyalkylene |
|---|---|---|---|---|---|---|---|---|
| | | part | $C_9$[*] | $C_{12}$[**] | $C_3$[***] | $C_2$ | | |
| P-1 | glycerin | 92 | 1500 | - | 1408 | - | 3000 | 50 |
| P-2 | trimethylol propane | 134 | 2100 | - | 466 | 300 | 3000 | 70 |
| P-3 | glycerin | 92 | - | 3600 | 2008 | 300 | 6000 | 60 |
| P-4 | sorbitol | 182 | - | 1200 | 4618 | - | 6000 | 20 |
| P-5 | propylene glycol | 76 | 600 | - | 1324 | - | 2000 | 30 |
| P-6 | diethylene glycol | 106 | 400 | - | 494 | - | 1000 | 40 |

[*] : nonene oxide,

[**] : α-olefin oxide having a carbon number of 12,

[***] : propylene oxide,

[****]: determined from OH group of the end position

Example 1

(1) Preparation of Thermoplastic Elastomer Composition:

Thermoplastic elastomer (styrene-ethylene-butylene-styrene block copolymer: available from Shell Chemical, Trade name of Kraton G-1652) 100 parts, tackifier (alicyclic hydrocarbon type: available from ARAKAWA CHEMICAL INDUSTRIES LTD., Trade name of Alcon P-90) 400 parts, plasticizer (available from Nippon Petrochemicals Co., Ltd., Trade name of Nisseki Polybutene HV-300) 100 parts, and wax (paraffin wax available from Nihon Seiro K.K., Trade name of SP-0145) 50 parts were charged into a kneader, and blended at 180 °C for one hour to give a thermoplastic elastomer composition.

(2) Preparation of Urethane Prepolymer:

Polybutadiene having hydroxyl groups at the terminal positions, a hydroxyl value of 46 and an average molecular weight of 2800 (referred to as PBD hereinafter), (R-45 HT, available from IDEMITSU SEKIYU KAGAKU K.K.) and the polyether polyol P-1 prepared in the above REFERENCE EXAMPLE were mixed in various ratios as shown in Table 2, into which an excess amount of tolylene diisocyanate (TDI) was added with stirring at 100 °C for 3 hours to give ten kinds of urethane prepolymers having a free isocyanate group content of 3.5 %.

(3) Preparation of Reactive Hot-Melt Adhesive Composition:

The thermoplastic elastomer composition obtained in the process (1) 60 parts and each of the urethane prepolymers of the process (2) 40 parts were charged into a kneader at 80 °C, and mixed for 10 minutes to give ten kinds of reactive hot-melt adhesive compositions.

(4) Evaluation:

The reactive hot-melt adhesive compositions of Example 1 were evaluated by the following methods.

(a) Compatibility:

5

Each reactive hot-melt adhesive composition was kneaded in a kneader, and then kept at 5 °C and 25 °C for 24 hours. The appearance of the product was observed.

- A: uniform and clear,
  B: slightly separated,
  C: completely separated.

(b) Hardening Ability

Each reactive hot-melt adhesive composition heated at 80 °C was shot onto an iron plate (80 x 150 x 2 $mm^3$) at a thickness of about 4 mm using a gun. The plate was held at 25 °C and 70 RH for 7 days, and the state of hardening of the composition was observed.

A: the depth being completely hardened,
B: the depth being half hardened,
C: the depth being not hardened.

(c) Existence of foam:

The existence of foam was observed in the hardened reactive hot-melt adhesive composition obtained in the above process (b) and evaluated.

A: no foam being observed,
B: existence of foam of up to 5 % being observed,
C: existence of foam of not less than 5 % being observed.

The results are shown in Table 2.

Table 2

| PBD/P-1 weight ratio | compatibility | | hardening ability | existence of foam |
|---|---|---|---|---|
| | 5 °C | 25 °C | | |
| 100/0 | # | # | # | # |
| 95/5 | A | A | B | A |
| 90/10 | A | A | A | A |
| 80/20 | A | A | A | A |
| 60/40 | A | A | A | A |
| 40/60 | A | A | A | A |
| 20/80 | A | A | A | A |
| 10/90 | A | A | A | A |
| 5/95 | A | A | A | A |
| 0/100 | A | A | A | A |
| #: gelation at preparation of urethane prepolymer | | | | |

Comparative Example 1

Ten kinds of reactive hot-melt adhesive compositions were prepared in a similar manner to that described in Example 1 except that polyoxybutylene glycol having two functional groups and an OH value of 56 (referred to as PBG hereinafter) was used instead of the polyether polyol (P-1).

The adhesive compositions obtained were evaluated according to the same procedure as in Example 1. The results are shown in Table 3.

EP 0 383 505 A2

Table 3

| PBD/PBG weight ratio | compatibility | | hardening ability | existence of foam |
|---|---|---|---|---|
| | 5°C | 25°C | | |
| 100/0 | # | # | # | # |
| 95/5 | C | C | C | C |
| 90/10 | C | A | C | B |
| 80/20 | C | A | B | A |
| 60/40 | A | A | A | A |
| 40/60 | A | A | A | A |
| 20/80 · | C | A | B | A |
| 10/90 | C | B | B | A |
| 5/95 | C | C | B | A |
| 0/100 | C | C | B | A |
| #: gelation at preparation of urethane prepolymer | | | | |

As apparent from the results shown in Tables 2 and 3 a urethane polyol obtained from the mixed polyol of a polyalkylene polyol (A) having hydroxyl groups at the terminal positions (PBD) and a polyether polyol (B) containing a polyoxyalkylene group having an alkylene group of carbon number six or more at 10 % by weight or more gives a reactive hot-melt adhesive composition stable even at a low temperature such as 5 °C with an excellent compatibility and hardening ability.

Examples 2 - 7:

Six kinds of reactive hot-melt adhesive compositions were prepared according to the same procedure as described in Example 1 except that Cariflex TR-1101 (styrene-butadiene-sytrene block copolymer available from Shell Chemical) was used instead of Kraton G-1652, the weight ratio of PBD and polyether polyol (P-1 ~ 6) being 30/70. the adhesive strength of the adhesive compositions obtained was examined. The results are shown in Table 4.

Comparative Example 2

A reactive hot-melt adhesive composition was prepared according to the same procedure as described in Comparative Example 1 except that Cariflex TR-1101 was used instead of Kraton G-1652 in the weight ratio of PBD/PBG of 30/70. The adhesive strength of the composition obtained was examined. The results are shown in Table 4.

Table 4

| Example | polyether polyol | adhesive strength (kg/cm$^2$) | | |
|---|---|---|---|---|
| | | 5°C | 25°C | 65°C |
| 2 | P - 1 | 8.2 | 8.8 | 6.2 |
| 3 | P - 2 | 8.3 | 9.0 | 6.1 |
| 4 | P - 3 | 8.5 | 9.1 | 5.9 |
| 5 | P - 4 | 8.4 | 8.9 | 6.1 |
| 6 | P - 5 | 8.1 | 8.7 | 6.0 |
| 7 | P - 6 | 8.0 | 8.6 | 5.8 |
| Comp. Ex. 2 | PBG | 6.0 | 6.4 | 4.5 |

7

The adhesive strength was determined by the following method.

A steel panel and a polypropylene film (100 x 20 x 2 mm³) were adhered by 2 g of a reactive hot-melt adhesive composition heated at 160 °C, and held at 30 °C and RH of 70 % for 5 days and then maintained at the given temperature shown in Table 4 for 3 hours. The laminated sheet obtained was separated at a rate of 20 mm/min. and a tension angle of 90 degrees using an Instron type autograph.

As apparent from Table 4 a reactive hot-melt adhesive composition of the present invention is excellent in adhesive strength at any temperature.

## Claims

1. A reactive hot-melt adhesive composition comprising:
a urethane prepolymer obtained from an organic polyisocyanate and polyether polyol, in which said polyether polyol contains an oxyalkylene group having a carbon number of 6 or more in the amount of 10% by weight or more based on the total weight of the polyether polyol, and
a thermoplastic elastomer.

2. A reactive hot-melt adhesive composition as claimed in Claim 1, in which the content of the urethane prepolymer is about 20 to about 80% by weight based on the total weight of the adhesive composition.

3. A reactive hot-melt adhesive composition as claimed in Claim 1 or Claim 2, which additionally comprises:
a tackifier,
a wax,
a plasticizer,
a filler, and
an antioxidant.

4. A reactive hot-melt adhesive composition as claimed in any one of the preceding claims in which the oxyalkylene group having a carbon number of 6 or more is derived from an alkylene oxide selected from 1,2-hexylene oxide, cyclohexene oxide, nonene oxide, and an α-olefin oxide having a carbon number of 12 - 28.

5. A reactive hot-melt adhesive composition as claimed in any one of the preceding claims in which substantially the whole of the oxyalkylene group of the polyether polyol is one having the carbon number of six or more.

6. A reactive hot-melt adhesive composition as claimed in any one of the preceding claims in which the thermoplastic elastomer is selected from an isoprene-styrene block copolymer, a butadiene-styrene block copolymer and these copolymers in hydrogenated form.

7. A reactive hot-melt adhesive composition as claimed in any one of the preceding claims comprising:
a urethane prepolymer obtained from an organic polyisocyanate and polyol, and
a thermoplastic elastomer,
wherein said polyol comprises:
a polyether polyol which contains an oxyalkylene group having the carbon number of 6 or more, in the amount of more than 10% by weight based on the total weight of the polyether polyol, and
a polyalkylene polyol having a saturated or unsaturated aliphatic backbone chain.

8. A reactive hot-melt adhesive composition as claimed in Claim 7, in which the weight ratio of the polyether polyol to the polyalkylene polyol is from 90/10 -10/90.

9. A reactive hot-melt adhesive composition as claimed in Claim 7 or Claim 8 in which the polyalkylene polyol having a saturated or unsaturated aliphatic backbone chain is selected from 1,4- or 1,2-polybutadiene having hydroxyl groups at the terminal position, and hydrogenated polybutadiene having hydroxyl groups at the terminal positions, polyolefin polyols.